# EUROPÄISCHE PATENTSCHRIFT

(11) **EP 0 396 888 B1**
(45) Veröffentlichungstag und Bekanntmachung des Hinweises auf die Patenterteilung: **23.06.1993**
(21) Anmeldenummer: 90105563.2
(22) Anmeldetag: 23.03.1990
(51) Int. Cl.: H01S 3/032

(54) **Gaslaser**
Gas laser
Laser à gaz

(30) Priorität: 17.04.1989 DE 3912609
(43) Veröffentlichungstag der Anmeldung: 14.11.1990
(73) Patentinhaber: SIEMENS AKTIENGESELLSCHAFT, 80333 München (DE)
(72) Erfinder: Krüger, Hans, Dipl.-Physiker, D-8000 München 83 (DE); Welsch, Wolfgang, Dr.-Ing., D-8011 Baldham (DE)

(56) Entgegenhaltungen:
- DE-B- 2 506 707
- DE-B- 2 754 756
- US-A- 4 250 467

## Beschreibung

Die vorliegende Erfindung betrifft einen Gaslaser nach dem Oberbegriff des Patentanspruchs 1. Ein derartiger Gaslaser ist aus der EP-A-0 262 352 bekannt. Dort werden rohrförmige Glasteile und kleine Metallrohre mit Endstücken aus Sinterglas mittels Glaslot verbunden. Eine derartige Glaslotverbindung läßt sich jedoch nicht ohne weiteres auf die Verbindung von mechanisch belasteten Metallteilen, insbesondere Metallkappen, mit Glas- oder Keramikteilen übertragen. Die für eine Glaslotverbindung notwendigen Lotgläser enthalten in der Regel Bleiborat. Diese Lotgläser führen erfahrungsgemäß zu nicht ausreichend belastbaren Verbindungen zwischen Glas- und Metallteilen.

Die Aufgabe, die der vorliegenden Erfindung zugrundeliegt, besteht bei einem Gaslaser gemäß dem Oberbegriff des Patentanspruchs 1 in einer Verbesserung der Haftfähigkeit und in einer dauerhaften gasdichten Verbindung zwischen dem Rohr aus Glas und Keramik und der Metallkappe. Diese Aufgabe wird erfindungsgemäß durch den Patentanspruch 1 gelöst.

Die Bleiboratgläser lösen beim Lötvorgang das Oxid auf der Metalloberfläche. Dadurch wird die Haftfestigkeit zwischen Glaslot und Metall reduziert. Die Haftfestigkeit zwischen dem Glaslot und dem Rohr aus Glas oder Keramik wird dagegen nicht reduziert und reicht für eine dauerhafte vakuumdichte Verbindung aus.

Basierend auf diesen Erkenntnissen reicht es erfindungsgemäß aus, ein Abrutschen der Metallkappe auf dem Glaslot zu verhindern, um eine dauerhafte vakuumdichte Verbindung zu erhalten. Durch die erfindungsgemäße Maßnahme werden insbesondere Zugspannungen in axialer Richtung aufgefangen. Derartige Zugspannungen treten z.B. infolge einer Halterung der Laserröhre über die Metallkappen auf. Diese Zugspannungen wurden erfindungsgemäß als Ursache für Ausfälle an Laserröhren mit Glaslotverbindungen erkannt. Diese Erkenntnis ermöglicht die vorliegende Erfindung.

Die Kappe hat dabei vorteilhaft einen das Rohrende übergreifenden Ring, wobei dieser Ring einen zu seinem freien Ende hin abnehmenden Durchmesser besitzt. In einer anderen vorteilhaften Ausführung besitzt der genannte Ring an seinem freien Ende Verformungen, die seinen Innenradius in Umfangsrichtung unterschiedliche Werte annehmen lassen. Der Ring kann beispielsweise eine wellenförmig deformierten Rand besitzen. Die Erfindung eignet sich insbesondere für den Einsatz von Metallkappen aus einer Nickel-Eisen-Kobalt-Legierung, deren Temperaturausdehnungskoeffizient an den des Rohres angepaßt ist.

Die Erfindung wird nun anhand von drei Figuren näher erläutert. Sie ist nicht auf die in den Figuren beschriebenen Beispiele beschränkt. Die Figuren zeigen verschiedene Ausführungsformen von erfindungsgemäßen Glaslotverbindungen zwischen Rohren aus Glas oder Keramik und Metallkappen.

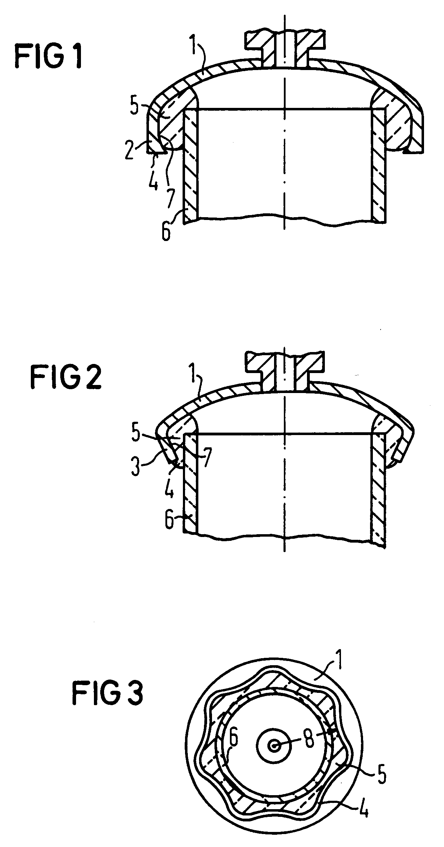

Gemäß Figur 1 weist eine Metallkappe 1 einen Metallring 2 auf, der im Bereich des Randes 4 gestaucht ist und dadurch im Bereich des Randes 4 näher an das Rohr 6 aus Glas oder Keramik heranreicht. Ein vom Rand 4 zurückliegender erweiteter Teil 7 der Metallkappe 1 ist zumindest teilweise vom Glaslot ausgefüllt. Das Glaslot 5 aus bleiborathaltigem Lotglas haftet auf dem Rohr 6 dauerhaft und vakuumdicht und wird durch den gestauchten freien Rand 4 an einer Ablösung in axialer Richtung gehindert. Dadurch ist eine vakuumdichte Verbindung auch zur Kappe 1 gewährleistet.

In Figur 2 besitzt die Metallkappe 1 einen Metallring 3, welcher ein zu seinem Randbereich 4 hin sich verjüngendes Profil aufweist, welches im wesentlichen kegelstumpfförmig ausgebildet ist. Auch dieser Ring verhindert eine Verschiebung der Kappe in axialer Richtung. In beiden Fällen füllt das Glaslot 5 den erweiterten Teil 7 so weit aus, daß eine Verschiebung der Kappe in beiden axialen Richtungen, d.h. nach oben wie auch nach unten in der Darstellung der Figur, verhindert wird.

In Figur 3 ist ein Querschnitt durch ein weiteres Beispiel eines erfindungsgemäßen Gaslasers dargestellt. Das Rohr 6 aus Glas oder Keramik erscheint hier in geschnittener Ansicht, während das Glaslot 5 und die Metallkappe 1 in einer Draufsicht erscheinen. Das Glaslot 5 ist schraffiert dargestellt. In diesem Beispiel ist der Rand 4 der Metallkappe 1 wellenförmig verformt, so daß in Umfangsrichtung unterschiedliche Werte für den Radius 8 des Randes 4 der Metallkappe gebildet sind. Diese Ausführungsform läßt sich einfach aus vorhandenen Metallkappen herstellen, indem eine nachträgliche Verformung im Randbereich durchgeführt wird. Auch hier wird die Metallkappe 1 durch das Lot 5 in axialer Richtung fixiert, indem das Lot 5 einen zurückliegenden erweiterten Raum zumindest teilweise ausfüllt.

## Patentansprüche

1. Gaslaser, dessen Gehäuse aus Metallteilen und aus einem Rohr (6) aus Glas oder Keramik zusammengesetzt ist, wobei zumindest ein vakuumdichter Übergang von einem Metallteil (1) zu dem Rohr (6) aus Glas oder Keramik mittels Glaslotes (5) vorgesehen ist, **dadurch gekennzeichnet**, daß das Metallteil eine Metallkappe (1) ist, daß das Glaslot (5) ein bleiborathaltiges Glaslot ist und daß die Metallkappe (1) so geformt ist, daß ihr freier Rand (4) zumindest stellenweise näher an das Rohr (6) heranreicht, als ein zurückliegender erweiterter Teil (7) der Metallkappe (1) und daß das Glaslot (5) den erweiterten Teil (7) zumindest teilweise ausfüllt.

2. Gaslaser nach Anspruch 1, **dadurch gekennzeichnet**, daß die Kappe einen das Rohrende übergreifenden Ring umfaßt und daß dieser Ring einen zu seinem freien Rand hin abnehmenden Durchmesser besitzt.

3. Gaslaser nach Anspruch 1, **dadurch gekennzeichnet**, daß die Kappe einen das Rohrende übergreifenden Ring umfaßt und daß dieser Ring an seinem freien Rand Verformungen besitzt, die seinen Innenradius in Umfangsrichtung unterschiedliche Werte annehmen lassen.

4. Gaslaser nach Anspruch 1, **dadurch gekennzeichnet**, daß die Metallkappe aus einer NiFeCo-Legierung besteht, deren Temperaturausdehnungskoeffizient an den des Rohres angepaßt ist.

## Claims

1. Gas laser whose housing is assembled from metal parts and from a tube (6) made from glass or ceramic, at least one vacuum-tight transition being provided from a metal part (1) to the tube (6) made from glass or ceramic by means of glass solder (5), characterised in that the metal part is a metal cap (1), in that the glass solder (5) is a glass solder containing lead borate, and in that the metal cap (1) is shaped such that its free edge (4) reaches at least at some points closer to the tube (6) than a retracted widened part (7) of the metal cap (1), and in that the glass solder (5) fills up the widened part (7) at least partly.

2. Gas laser according to Claim 1, characterised in that the cap comprises a ring overlapping the tube end, and in that this ring has a diameter decreasing towards its free edge.

3. Gas laser according to Claim 1, characterised in that the cap comprises a ring overlapping the tube end, and in that on its free edge this ring has deformations which allow its inside radius to assume differing values in the circumferential direction.

4. Gas laser according to Claim 1, characterised in that the metal cap comprises a NiFeCo alloy whose coefficient of thermal expansion is matched to that of the tube.

## Revendications

1. Laser à gaz dont le boîtier est composé de parties métalliques et d'un tube (6) en verre ou en céramique, du type dans lequel il est prévu, au moyen de brasure pour le verre (5), au moins une transition étanche au vide entre une partie métallique (1) et le tube (6) en verre ou en céramique, caractérisé en ce que, la partie métallique est un capuchon métallique (1), en ce que la brasure pour le verre (5) est une brasure pour le verre contenant du borate de plomb et en ce que le capuchon métallique (1) est conformé de telle sorte que son bord libre (4) s'étend, au moins par endroit, plus près du tube (6), qu'une partie élargie et en retrait (7) du capuchon métallique (1), et que la brasure pour le verre (5) comble au moins en partie la partie élargie (7).

2. Laser à gaz selon la revendication 1, caractérisé en ce que le capuchon comporte un anneau recouvrant l'extrémité du tube et en ce que cet anneau possède un diamètre diminuant vers son bord libre.

3. Laser à gaz selon la revendication 1, caractérisé en ce que le capuchon comporte un anneau recouvrant l'extrémité du tube et en ce que cet anneau possède des déformations au niveau de son bord libre, qui permettent à son rayon inférieur, de présenter des valeurs différentes dans le sens périphérique..

4. Laser à gaz selon la revendication 1, caractérisé en ce que le capuchon métallique est constitué d'un alliage NiFeCo, dont le coefficient de dilatation thermique est adapté à celui du tube.
